# EUROPÄISCHE PATENTSCHRIFT

(11) **EP 0 606 592 B1**
(45) Veröffentlichungstag und Bekanntmachung des Hinweises auf die Patenterteilung: **14.05.1997**
(21) Anmeldenummer: 93119942.6
(22) Anmeldetag: 10.12.1993
(51) Int. Cl.: C09C 1/00, C04B 33/14, C03C 4/02, C08K 3/00, C09D 7/12, C09D 11/00, C23C 26/00, B32B 9/00

(54) **Fliessfähige chemisch resistente Farbgranulate, deren Herstellung und Verwendung**
Free-flowing chemically resistant colouring granules, their preparation and their use
Granulés colorants chimiquement résistants à écoulement libre, leur préparation et leur utilisation

(30) Priorität: 30.12.1992 IT MI922995
(43) Veröffentlichungstag der Anmeldung: 20.07.1994
(73) Patentinhaber: FERRO (ITALIA) s.r.l., I- 40123 Bologna (IT)
(72) Erfinder: Thometzek, Peter, Dr., Florano Modenese (MO) (IT); Christ, Heinrich, Dr., Spilamberto-S. Vito (MO) (IT)
(74) Vertreter: Klausner, Erich

(56) Entgegenhaltungen:
- EP-A- 0 555 849
- FR-A- 2 518 559
- FR-A- 2 692 586
- FR-A- 2 692 587
- US-A- 1 719 432
- US-A- 2 937 951
- US-A- 3 271 171
- US-A- 3 847 639

## Beschreibung

Die Erfindung betrifft fließfähige, chemisch resistente Farbgranulate, die durch Aufbaugranulation hergestellt werden, sowie deren Verwendung.

Viele Pigmente bzw. anorganische Farbkörper, die zur Einfärbung von Keramik, Emaillierungen, Glas, Kunststoffen etc. eingesetzt werden, weisen nur eine begrenzte thermische oder chemische Stabilität auf. Beispielsweise sind Emailschmelzen während der Verarbeitung aufgrund ihrer hohen B203 - bzw. Alkaligehalte besonders aggressiv gegenüber anorganischen Farbkörpern. Dies führt bei der Verarbeitung vieler Pigmente in Emaillierungen zu unerwünschten Farbverschiebungen bzw. zum vollständigen Auflösen der gewöhnlich ca. 0,2 bis 0,7 µm großen Pigmentpartikel.

Einige Farbkörper sind zwar in Email- bzw. Keramikschmelzen relativ stabil, enthalten jedoch ökologisch bedenkliche Elemente wie beispielsweise Blei, Cadmium, fünfwertiges Antimon, sechswertiges Chrom etc.

Dies hat Rückwirkungen auf die Entsorgung der eingefärbten Gegenstände.

Eine begrenzte Zahl von Farbkörpern kann in Form von Einschlußpigmenten stabilisiert werden (siehe EP-A-74.779).

Die Patentschrift US-1 719 432 beschreibt die Stabilisierung von Farbpigmenten mit Zirkon unter Verwendung eines Flussmittels. Nach diesem Verfahren wird die Rohstoffmischung drei Stunden bei 950°C geglüht und anschließend erneut fein gemahlen.

Farbpigmente auf der Basis von mit Metalloxiden beschichteten plättchenförmigen Substraten, wobei die Beschichtung mindestens 10 Gew.% Al₂O₃ enthält, sind ebenfalls bekannt (DE-A-4.007.037). Das Al₂O₃ setzt die Farbstärke und Brillanz des Farbpigmentes herab. Da das Pigment nicht durchgefärbt ist, wird beim chemischen Angriff bevorzugt die farbige Oberflächenschicht gelöst.

In EP-A-555849 sind Hartstoffpartikel auf Oxidbasis, insbesondere aus Korund, welche mit keramischen Farbkörpern ummantelt sind, sowie ein Verfahren zu ihrer Herstellung, beschrieben.

Mit diesem Verfahren lassen sich relativ grobe Körnungen ab etwa 30 µm beschichten.

Auch die Stabilisierung von Farbkörpern in Schmelzkorunden ist bekannt (JA 78/128600). Infolge der Herstellung im Lichtbogenofen bei hoher Temperatur kann jedoch nur ein sehr begrenztes Farbspektrum hergestellt werden. Die Herstellung - insbesondere die Mikronisierung - dieser Produkte ist aufwendig und teuer.

Bisher war es jedoch nicht möglich, eine breite Palette von Farben für die Einarbeitung in aggressive Medien, wie beispielsweise Emaillierungen zur Verfügung zu stellen, ohne auf schwermetallhaltige Pigmente zurückzugreifen.

Aufgabe war es daher, Farbkörper zur Verfügung zu stellen, die eine hohe Farbstärke und Brillanz aufweisen, chemisch resistent und gut fließfähig sind und keine bedenklichen Schwermetalle enthalten.

Überraschenderweise konnte diese Aufgabe mit Hilfe der erfindungsgemäßen Farbgranulate gelöst werden.

Gegenstand der Erfindung sind fließfähige, chemisch resistente Farbgranulate, die in aggressiven Medien temperatur- und farbstabil sind und keine bedenklichen Schwermetalle enthalten, die dadurch gekennzeichnet sind, daß sie
- 20 - 94,8 Gew.-%: eines oder mehrerer anorganischer Farbkörper und/oder mente
- 5 - 75 Gew.-%: eines oder mehrerer Fritten und/oder Gläser
- 0,2 - 20 Gew.-%: eines oder mehrerer anorganischer und/oder organischer Bindemittel
enthalten und eine mittlere Granulatgröße von 5 bis 25 µm, vorzugsweise 5 bis 12 µm aufweisen.

Als anorganische Farbkörper oder Pigmente werden vorzugsweise reine Oxide oder Mischphasenoxide eingesetzt. Als Pigmente basierend auf einem Oxid seien beispielhaft Eisenoxid, Titanoxid, Zinnoxid und Ceroxid genannt. Mischphasenoxide basieren auf zwei oder mehr Elementoxiden von z.B. Eisen, Kobalt, Vanadium, Wolfram, Mangan, Kupfer, Chrom, Aluminium, Silicium, Zirkonium, Titan, Zinn und Zink.

Besonders bevorzugt werden Farbkörper auf der Basis von Zirkonium/Praseodym/Silicium-oxid, Zirkonium/Vanadium-oxid, Zinn/Vanadium-oxid, Kobalt/Aluminium-oxid, Kobalt/Silicium-oxid, Kobalt/Aluminium/Wolfram-oxid, Zirkonium/Vanadium-oxid, Zink/Kobalt/Aluminium-oxid, Zirkonium/Eisen/Siliciumoxid, Chrom/Zinn-oxid und Chrom/Aluminium-oxid eingesetzt.

Auch Sulfide wie z.B. Cersulfid und Lanthansulfid werden als Farbkörper eingesetzt.

Der Anteil an Farbkörpern und/oder Pigmenten im Granulat beträgt 20 bis 94,8 Gew.-%, vorzugsweise 25 bis 80 Gew.-%.

Als organische Bindemittel werden vorzugsweise temporäre Binder wie Stärke- und Dextrinleime, Celluloseether wie beispielsweise Methylcellulose oder Carboxymethylcellulose, Bindemittel auf Polysaccharidbasis, Klebstoffe auf Basis von Polyvinylacetaten, Polyacrylaten, Polyvinylalkoholen, Dispersionsklebstoffe auf Kunstharz- oder Kautschukbasis, ein- oder zweikomponentenhaltige Polykondensationsklebstoffe und Polyether oder Polywachse etc. in Lösung bzw. Suspension bzw. gegebenenfalls in Emulsion eingesetzt.

Als anorganische Bindemittel werden vorzugsweise Natriumsilikat, Kaliumsilikat, Aluminiumphosphat, insbesondere Monoaluminiummonophosphat, Phosphorsäure, Natriumaluminiumphosphat, Natriumaluminat, Borphosphat, Aluminiumsilikat, Natriumcalciumsilikat, Kaliumcalcium-silikat, Silikonphosphat, Kieselsol und Al(OH)₃-Sol etc. eingesetzt.

Entweder allein oder in geeigneter Kombination sind diese Bindemittel in einer Menge von 0,2 bis 20 Gew.-%, vorzugsweise 0,5 bis 10 Gew.-%, bezogen auf den Feststoffgehalt, im Granulat vorhanden.

Zur Herstellung hydrophober Granulate werden als Bindemittel zusätzlich oder anstelle der anorganischen und/oder organischen Bindemittel ein oder mehrere Organosilane und/oder Polyorganosiloxane in einer Menge von 0,03 bis 15 Gew.-%, vorzugsweise 0,1 bis 6 Gew.-% eingesetzt, wobei die Gesamtmenge an Bindemittel/Organosilan und/oder Polyorganosiloxan mindestens 0,2 Gew.-% und höchstens 20 Gew.-% betragen soll.

Die Farbgranulate enthalten weiterhin 5 bis 75 Gew.-%, vorzugsweise 20 bis 60 Gew.-% einer oder mehrerer Fritten und/oder Gläser. Durch geeignete Wahl der Frittenzusammensetzung bzw. des Temperatur-Viskositätsverlaufes der Fritte wird die chemische Stabilität und Farbbrillanz erhöht. Vorzugsweise werden Fritten mit folgender Zusammensetzung eingesetzt:

| | |
|---|---|
| SiO₂ + B₂O₃ + Al₂O₃ | 20 - 90 Gew.-% |
| Na₂O + Li₂O | 0 - 6 Gew.-% |
| K₂O | 0 - 6 Gew.-% |
| CaO + MgO + SrO | 10 - 25 Gew.-% |
| TiO₂ + ZrO₂ | 0 - 35 Gew.-% |
| Bi₂O₃ + P₂O₅ + V₂O₅ + MoO₃ + WO₃ | 0 - 40 Gew.-% |
| ZnO | 0 - 10 Gew.-% |

mit einem B₂O₃-Gehalt kleiner als 25 Gew.-%, vorzugsweise kleiner als 5 Gew.-%. Vorzugsweise sind die eingesetzten Fritten hochglänzende Transparentfritten mit hohem Brechungsindex > 1,5, besonders bevorzugt > 1,6. Durch Auswahl geeigneter Fritten kann der mit dem erfindungsgemäßen Granulat nach Einarbeitung erhaltene Farbton in gewissen Grenzen modifiziert bzw. optimiert werden. Selbstverständlich können Farbgranulate auch ohne Frittenanteil hergestellt werden. Allerdings wird dadurch die chemische Stabilität in aggressiven Schmelzen verschlechtert.

Zur Einarbeitung in bestimmte Medien wie z.B. Kunststoffe oder Gummi bzw. für bestimmte Applikationstechniken wie z.B. den Trockenauftrag im elektrostatischen Feld auf zu emaillierende Gegenstände bzw. keramische Substrate werden hydrophobe Farbgranulate eingesetzt, die 0,03 bis 15 Gew.-%, vorzugsweise 0,1 bis 8 Gew.-% eines oder mehrerer hydrophober Organosilane und/oder Polyorganosiloxane zusätzlich oder anstelle der anorganischen Bindemittel enthalten, wobei die Gesamtmenge an Bindemittel/Organosilan und/oder Polyorganosiloxan mindestens 0,2 Gew.-% und höchstens 20 Gew.-% betragen soll.

Die erfindungsgemäßen Farbgranulate weisen eine mittlere Korngröße von 5 bis 25 µm, vorzugsweise 5 bis 12 µm auf, d.h. im Vergleich zum Farbkörper eine um ein bis zwei Zehnerpotenzen höhere Teilchengröße. Diese Korngröße bedingt eine zusätzlich Steigerung der Stabilität beim Einbrand in Glasuren bzw. Emaillierungen.

Durch Mischung der erfindungsgemäßen Granulate, die vorzugsweise in den Grundfarben Gelb, Blau und Rot vorliegen, läßt sich, gegebenenfalls zusätzlich mit Weiß und Schwarz, nahezu das gesamte Farbspektrum erhalten.

Im Gegensatz zu Farbkörpern werden mit den Granulaten überraschenderweise reinere, brillantere Farbtöne erhalten. Die normalerweise beobachtete Verschiebung des Farbtons zu schmutzigen Farbtönen beim Mischen von Pigmenten wird bei den Farbgranulaten nicht beobachtet. So wird z.B. durch Mischen von erfindungsgemäßen gelben und roten Granulaten (z.B. Zr-Pr-Si-O - Gelb mit Cr-Sn-O - Rot) ein intensives, reines Orange erhalten. Beim Mischen der reinen Pigmente verschiebt sich dagegen der beobachtete Farbeindruck nach braun.

Ein weiterer Gegenstand der Erfindung ist die Herstellung der erfindungsgemäßen Farbgranulate, die dadurch gekennzeichnet ist, daß die Granulatkomponenten ausschließlich des/der Bindemittel auf eine Korngröße von kleiner als 10 Mikron, vorzugsweise kleiner als 5 Mikron gebracht werden, in einem Granulierungsaggregat wie beispielsweise einem Mischaggregat, Zwangsmischer, Granulierteller oder Fließbettgranulator innig vermischt werden und mit einem oder mehreren anorganischen und/oder organischen Bindemitteln in einer Menge von 0,2 bis 20 Gew.-%, vorzug sweise 0,5 bis 10 Gew.-%, bezogen auf den Feststoffgehalt, gegebenenfalls unter Zusatz von Wasser oder anderer geeigneter Flüssigkeiten (Dispergierhilfsmitteln) wie Alkoholen granuliert werden, anschließend zwischen 120 und 1200°C, vorzugsweise 150 bis 350°C bis zu 24 Stunden getempert und gegebenenfalls klassiert werden.

Die Aufmahlung der Granulatkomponenten vor der Granulation erfolgt beispielsweise in Kugelmühlen durch Trocken bzw. vorzugsweise Naßmahlung, Gegenstrahlmühlen, Dampfstrahlmühlen, Perlmühlen, Ringspaltmühlen, Walzenmühlen oder Prallmühlen. Eine Absiebung bzw. Sichtung des Grobkornes über 40 Mikron kann sich anschließen. Die Bindemittelmenge und Bindemittelkonzentration wird so eingestellt, das nach Granulation und Temperung ein abriebfestes Produkt mit der gewünschten mittleren Teilchengröße von 5 bis 25 Mikron erhalten wird. Eine Trocknung bzw. Temperung zwischen 120°C und 1200°C, vorzugsweise 150 bis 350°C, dient zur Verfestigung der Granulatkörner. Gegebenenfalls wird danach eine Siebung bzw. Sichtung zur Abtrennung des Grobkornes durchgeführt.

Bei der Herstellung hydrophober Farbgranulate werden als Hydrophobierungsmittel bevorzugt Organosilane und/oder Polyorganosiloxane z.B. in wäßriger Emulsion eingesetzt. Hierdurch wird eine gleichmäßige Benetzung der Pulverpartikel mit den emulgierten Polyorganosiloxantröpfchen erreicht. Bei der anschließenden Temperung erhält man ein hydrophobes Aufbaugranulat. Verwendete Organosilane sind z.B. Silanole wie Trimethylsilanol. Eingesetzte Polyorganosiloxane sind beispielsweise Trimethylsilylpolydimethylsiloxane, die gegebenenfalls auch Methylphenyl- bzw. Diphenylsiloxygruppen oder Methylhydrogensiloxylgruppen aufweisen können. Vorzugsweise erfolgt die Zugabe der wäßrigen Emulsionen der Polyorganosiloxane zur Granulation zusammen mit einem weiteren Bindemittel. Die Zugabe der Emulsion kann gegen Ende des Granulationsprozesses erfolgen, wobei in diesem Fall im Anfangsstadium die Granulatkomponent mit einem oder mehreren temporären bzw. permanenten Bindemitteln benetzt bzw. agglomeriert werden.

Ein weiterer Gegenstand der Erfindung ist die Herstellung der erfindungsgemäßen Farbgranulate, die dadurch gekennzeichnet ist, daß die Granulatkomponenten ausschließlich des/der Bindemittel auf eine Korngröße kleiner als 10 Mikron, vorzugsweise kleiner als 5 Mikron gebracht werden, mit einem oder mehreren anorganischen und/oder organischen Bindemitteln in einer Menge von 0,2 bis 20 Gew.-%, vorzugsweise 0,2 bis 10 Gew.-%, bezogen auf den Feststoffgehalt, gegebenenfalls unter Zusatz von Wasser und/oder eines Dispergierhilfsmittels versetzt werden, die so erhaltene Suspension in einem Sprühturm zu möglichst kugelförmigen Granalien versprüht und die Granalien gegebenenfalls zwischen 120 und 1200°C, vorzugsweise 150 und 350°C bis zu 24 Stunden getempert und gegebenenfalls klassiert werden.

Die Herstellung des Farbgranulates kann auch in einem Fließbetttrockner, Walzentrockner oder Heißgasreaktor, vorzugsweise mit starker Wirbelströmung erfolgen (Turbulator der Fa. Maurer oder Reaktionskammer der Fa. Babcock).

Im Gegensatz zu anorganischen Farbkörpern oder Pigmenten neigen die erfindungsgemäßen Farbgranulate nicht zum Stauben. Sie sind zudem sehr gut fließfähig und dadurch leichter zu verarbeiten.

Da die Granulatkomponenten fest im Granulatkorn fixiert sind, kann bei der Verarbeitung keine Entmischung erfolgen.

Die fließfähigen, chemisch resistenten Farbgranulate werden zur Einfärbung von Emaillierungen, Glasuren, keramischen Schichten, Gläsern etc. eingesetzt, wo sie stabile, brillante Farben mit hoher Deckkraft ergeben.

Dabei können sie entweder in diese Medien eingearbeitet oder zur Oberflächendekoration der genannten Substrate verwendet werden.

Die erfindungsgemäßen Farbgranulate werden außerdem in hydrophober Form zur Einfärbung von Kunststoffen, Kunstharzen, Gummi, Lacken, Laminaten, Druckfarben und Farbtinten etc. verwendet.

Durch gezielte Abmischung von mindestens zwei erfindungsgemäßen Farbgranulaten können ohne Schwermetalle wie Chrom, Cadmium, Blei, fünfwertiges Antimon etc. die meisten Farbtöne erhalten werden. Bisher konnten viele Farbtöne nur mit diesen Schwermetallen als Farbkörper erhalten werden, oder die Farbkörper waren chemisch nicht resistent.

Die Erfindung soll anhand der nachfolgenden Beispiele näher erläutert werden.

### Beispiel 1

In einem Zwangsmischer der Fa, Eirich, Hardheim, werden folgende Ausgangsprodukte vorgelegt:
1,3 kg eines blauen Farbkörpers auf Basis von Aluminium- und Kobaltoxid (Handelsprodukt Nr. FS 641 der Fa. Bayer AG, Leverkusen) und
0,6 kg einer keramischen Fritte folgender Zusammensetzung in Gew.-%

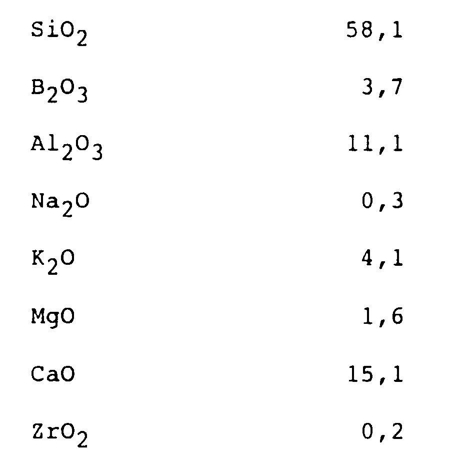

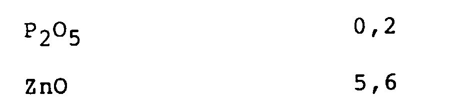

Die Fritte wird zuvor durch Naßmahlung in einer Porzellankugelmühle auf eine mittlere Korngröße von 4 µm gebracht, getrocknet und pulverisiert. Die Korngrößenbestimmung erfolgt mit einem Korngrößenmeßgerät der Fa. Malvern, Worcestershire.

Nach intensivem Homogenisieren im Zwangsmischer gibt man nach und nach 250 g einer wässrigen, 32%igen Kaliumsilicat-Lösung hinzu.

Nach intensivem Mischvorgang wird das erhaltene, feinteilige Granulat in einem Trockenschrank 2 Stunden bei 250°C getempert. Nach Absiebung des Grobanteils über 40 Mikron weist das erhaltene Farbgranulat eine mittlere Korngröße von 11 µm auf.

5 Gew.-% des Farbgranulates wird in eine Transparent-emailfritte (Handelsprodukt Nr. TR 2500 der Fa. Bayer AG, Leverkusen) eingearbeitet.

Nach Auftrag auf ein grundemailliertes Blech und Brand bei 820°C und 4 Minuten erhält man eine tiefblaue Emaillierung mit hoher Brillanz und Deckkraft.

### Beispiel 2

Gleiche Vorgehensweise wie in Beispiel 1, jedoch wird anstelle des Co-Al-O-Farbkörpers ein gelber Farbkörper des Systems Zr-Si-Pr-O (Handelsprodukt Nr. FZ 347 der Fa. Bayer AG, Leverkusen) verwendet.

Nach Einarbeitung von 5 Gew.-% des Farbgranulates in ein Transparentemail (siehe Beispiel 1) wird eine gelbe Emaillierung mit hoher Brillanz, Deckkraft und Farbstärke erhalten.

### Beispiel 3

Gleiche Vorgehensweise wie in Beispiel 1, es wird jedoch ein roter Farbkörper des Systems ZR-Si-Fe-O (Handelsprodukt Nr. FZ 805 der Fa. Bayer AG, Leverkusen)eingesetzt.

Nach Einarbeitung von 5 Gew.-% des roten Farbgranulates in ein Transparentemail (siehe Beispiel 1) wird eine rote Emaillierung mit hoher Brillanz erhalten.

### Beispiel 4

3,8 Gew.-% des gelben Farbgranulates aus Beispiel 2 werden mit 1,2 Gew.-% des blauen Farbgranulates aus Beispiel 1 in die Transparentemailfritte (siehe Beispiel 1) eingearbeitet. Man erhält eine dunkelgrüne Emaillierung mit hoher Brillanz und Deckkraft.

### Beispiel 5

3,8 Gew.-% des gelben Farbkörpers aus Beispiel 2 werden mit 1,2 Gew.-% des blauen Farbkörpers aus Beispiel 1 in die Transparentemailfritte (siehe Beispiel 1) eingearbeitet. Man erhält eine schwache, schmutziggrüne, inhomogene Einfärbung mit geringer Deckkraft. Der gelbe Farbkörper wurde von der aggressiven Emailschmelze stark angelöst.

### Beispiel 6

4 Gew.-% des roten Farbgranulats aus Beispiel 3 und 1 Gew.-% des blauen Farbgranulats aus Beispiel 1 werden in die Transparentemail (siehe Beispiel 1) eingearbeitet. Man erhält eine weinrote Emaillierung mit hoher Brillanz und Deckkraft.

### Beispiel 7

4 Gew.-% des roten Farbkörpers aus Beispiel 3 und 1 Gew.-% des blauen Farbkörpers aus Beispiel 1 werden in die Transparentemail (siehe Beispiel 1) eingearbeitet. Man erhält eine schwachrote, inhomogene Emaillierung ohne wesentliche Deckkraft.

### Beispiel 8

Gleiche Vorgehensweise wie Beispiel 1, zu Granulation werden nach Zugabe der Kaliumwasserglaslösung zusätzlich 20 g einer 50%igen, wässrigen Polysiloxan-Emulsion (Baysilon AC 3454, Handelsprodukt der Fa. Bayer AG, Leverkusen) zugefügt. Man erhält nach Temperung bei 200°C ein blaues, hydrophobes Granulat mit ausgezeichneten Fließeigenschaften.

5 Gew.-% des hydrophoben Farbgranulates werden mit 95 Gew.-% eines Puesta-Pulvers (Handelsprodukt Nr. Tr 2500 P der Fa. Bayer AG, Leverkusen), bestehend aus der Transparentemailfritte und einem Hydrophobierungsmittel, gemischt und bei 50 KV auf ein Emailblech aufgetragen. Man erhält nach Einbrand eine tiefblaue homogene Emaillierung mit hoher Deckkraft und Brillanz. Eine Entmischung zwischen Fritte und Farbgranulat wird nicht beobachtet.

## Patentansprüche

1. Fließfähige, chemisch resistente Farbgranulate, die in aggressiven Medien temperatur- und farbstabil sind, dadurch gekennzeichnet, daß sie
20 - 94,8 Gew.-% eines oder mehrerer anorganischer Farbkörper und/oder Pigmente
5 - 75 Gew.-% eines oder mehrerer Fritten und/oder Gläser
0,2 - 20 Gew.-% eines oder mehrerer anorganischer und/oder organischer Bindemittel
enthalten und eine mittlere Granulatgröße von 5 bis 25 µm, vorzugsweise 5 bis 12 µm aufweisen.

2. Farbgranulate nach Anspruch 1, dadurch gekennzeichnet, daß die Fritte oder Fritten folgende Zusammensetzung aufweisen: 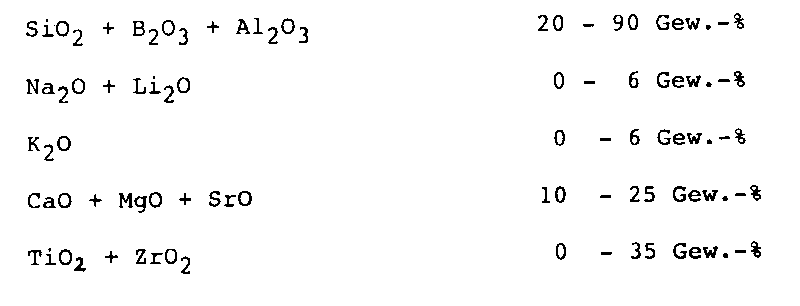 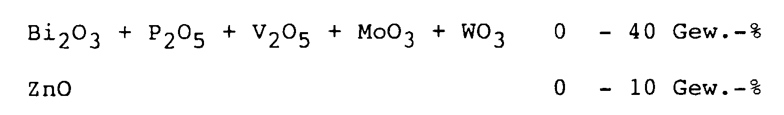 mit einem B₂O₃-Gehalt kleiner als 25 Gew.-%, vorzugsweise kleiner als 5 Gew.-%.

3. Farbgranulate nach Anspruch 1 oder 2, dadurch gekennzeichnet, daß sie als Bindemittel zusätzlich oder anstelle der anorganischen und/oder organischen Bindemittel ein oder mehrere hydrophobe Organosilane und/oder Organopolysiloxane in einer Menge von 0,03 bis 15 Gew.-%, vorzugsweise 0,1 bis 6 Gew.-% enthalten, wobei die Gesamtmenge an Bindemittel/Organosilan und/oder Polyorganosiloxan mindestens 0,2 Gew.-% und höchstens 20 Gew.-% betragen soll.

4. Gelbe Farbgranulate nach einem oder mehreren der Ansprüche 1 bis 3, dadurch gekennzeichnet, daß sie einen oder mehrere gelbe Farbkörper aus der Gruppe Zirkonium/Präseodym/Silicium-Oxid-Gelb, Zirkonium/Vanadium-Oxid-Gelb und Zinn/Vanadium-Oxid-Gelb enthalten.

5. Blaue Farbgranulate nach einem oder mehreren der Ansprüche 1 bis 3, dadurch gekennzeichnet, daß sie einen oder mehrere blaue Farkörper aus der Gruppe Cobalt-Oxid-Blau, Cobalt/Aluminium-Oxid-Blau, Cobalt/Aluminium/ Wolfram-Oxid-Blau, Cobalt/Silicium-OXid-Blau, Zirkonium/ Vanadium-Oxid-Blau und Zink/Cobalt/Aluminium-Oxid-Blau enthalten.

6. Rote Farbgranulate nach einem oder mehreren der Ansprüche 1 bis 3, dadurch gekennzeichnet, daß sie einen oder mehrere rote Farbkörper aus der Gruppe Zirkonium/Eisen/Silicium-Oxid-Rot, Eisenoxid-Rot, Chrom/Zinn-Oxid-Rot und Chrom/Aluminium-Oxid-Rot enthalten.

7. Verfahren zur Herstellung der Farbgranulate gemäß den Ansprüchen 1 bis 6, dadurch gekennzeichnet, daß die Granulatkomponenten ausschließlich der Bindemittel, die gegebenenfalls auf eine mittlere Korngröße von kleiner als 10 µm, vorzugsweise kleiner als 5 µm vermahlen werden, in einem Granulieraggregat innig vermischt und mit einem oder mehreren anorganischen und/oder organischen Bindemitteln in einer Menge von 0,2 bis 20 Gew.-%, vorzugsweise 0,5 bis 10 Gew.-%, bezogen auf den Feststoffgehalt, gegebenenfalls unter Zusatz von Wasser und/oder Dispergierhilfsmitteln granuliert werden, anschließend zwischen 120 und 1200°C, vorzugsweise 150 bis 350°C bis zu 24 Stunden getempert und gegebenenfalls klassiert werden.

8. Verfahren zur Herstellung der Farbgranulate nach Anspruch 7, dadurch gekennzeichnet, daß die Granulatkomponenten ausschließlich des/der Bindemittel auf eine mittlere Korngröße kleiner als 10 µm, vorzugsweise kleiner als 5 µm gebracht werden, mit einem oder mehreren anorganischen und/oder organischen Bindemitteln in einer Menge von 0,2 bis 20 Gew.-%, vorzugsweise 0,2 bis 10 Gew.-%, bezogen auf den Feststoffgehalt, gegebenenfalls unter Zusatz von Wasser und/oder gierhilfsmitteln versetzt werden, die so erhaltene Suspension in einem Sprühturm zu möglichst kugelförmigen Granalien versprüht werden und die Granalien gegebenenfalls zwischen 120 und 1200°C, vorzugsweise 150 und 350°C bis zu 24 Stunden getempert und klassiert werden.

9. Verwendung der Farbgranulate gemäß den Ansprüchen 1 bis 6 zur Einarbeitung in Emails, Glasuren, keramischen Schichten, Gläsern, Kunststoffen, Lacken, Gummi, Laminaten, Druckfarben und Farbtinten.

10. Verwendung der Farbgranulate gemäß den Ansprüchen 1 bis 6 als Farbmedium zur Oberflächendekoration von Emaillierungen, Glasuren, keramischen Schichten, Gläsern, Kunststoffen, Gummi und Metallen.

11. Verwendung der Farbgranulate gemäß den Ansprüchen 1 bis 6 in verschiedenen Abmischungen untereinander.

## Claims

1. Chemically resistant colouring granules which are able to flow, which in aggressive media are stable as regards temperature and colour, characterised in that they contain
20 - 94.8% by weight of one or more inorganic colouring agents and/or pigments
5 - 75% by weight of one or more frits and/or glasses
0.2 - 20% by weight of one or more inorganic and/or organic binders and have an average granule
size of 5 to 25 µm, preferably 5 to 12 µm.

2. Colouring granules according to Claim 1, characterised in that the frit or frits have the following composition:
| | |
|---|---|
| SiO₂ + B₂O₃ + Al₂O₃ | 20 - 90% by weight |
| Na₂O + Li₂O | 0 - 6% by weight |
| K₂O | 0 - 6% by weight |
| CaO + MgO + SrO | 10 - 25% by weight |
| TiO₂ + ZrO₂ | 0 - 35% by weight |
| Bi₂O₃ + P₂O₅ + V₂O₅ + MoO₃ + WO₃ | 0 - 40% by weight |
| ZnO | 0 - 10% by weight |
with a B₂O₃-content less than 25% by weight, preferably less than 5% by weight.

3. Colouring granules according to Claim 1 or 2, characterised in that as the binder, in addition or in place of the inorganic and/or organic binder they contain one or more hydrophobic Organosilanes and/or Organopolysiloxanes in a quantity of 0.03 to 15% by weight, preferably 0.1 to 6% by weight, in which case the total quantity of binder/Organosilane and/or Polyorganosiloxane should amount to at least 0.2% by weight and at the most 20% by weight.

4. Yellow colouring granules according to one or more of Claims 1 to 3, characterised in that they contain one or more yellow colouring agents from the group Zirconium/Praseodymium/Silicon-Oxide-Yellow,Zirconium/Vanadium-Oxide-Yellow and Tin/Vanadium-Oxide-Yellow.

5. Blue colouring granules according to one or more of Claims 1 to 3, characterised in that they contain one or more blue colouring agents from the group Cobalt-Oxide-Blue, Cobalt/Aluminium-Oxide-BlueCobalt/Aluminium/Wolfram-Oxide-Blue, Cobalt/Silicon-Oxide-Blue, Zirconium/Vanadium-Oxide-Blue and Zinc/Cobalt/Aluminium-Oxide-Blue.

6. Red colouring granules according to one or more of Claims 1 to 3, characterised in that they contain one or more red colouring agents from the group Zirconium/Iron/Silicon-Oxide-Red, Iron/Oxide-Red, Chromium/Tin-Oxide-Red and Chromium/Aluminium-Oxide-Red.

7. Method for the manufacture of the colouring granules according to Claims 1 to 6, characterised in that the granule components excluding the binding agents, which if necessary are ground to an average grain size of less than 10 µm, preferably less than 5 µm, are mixed thoroughly in a granulating unit and granulated with one or more inorganic and/or organic binding agents in a quantity of 0.2 to 20% by weight, preferably 0.5 to 10% by weight, with respect to the solid content, if necessary with the addition of water and/or dispersing agents, then heat-treated at between 120 and 1200°C, preferably 150 to 350°C for up to 24 hours and if necessary graded.

8. Method for the manufacture of the colouring granules according to Claim 7, characterised in that the granule components excluding the binding agent(s) are brought to an average grain size of less than 10 µm, preferably less than 5 µm, are mixed with one or more inorganic and/or organic binding agents in a quantity of 0.2 to 20% by weight, preferably 0.2 to 10% by weight, with respect to the solid content, if necessary with the addition of water and/or dispersing agents, the suspension obtained in this way is sprayed in a spray tower to produce granules which are as spherical as possible and the granules are possibly heat-treated at between 120 and 1200°C, preferably 150 and 350°C for up to 24 hours and graded.

9. Use of colouring granules according to Claims 1 to 6 for incorporation in enamels, glazes, ceramic layers, glasses, synthetic materials, lacquers, rubber, laminates, printing inks and coloured inks.

10. Use of colouring granules according to Claims 1 to 6 as a colouring medium for the surface decoration of enamels, glazes, ceramic layers, glasses, synthetic materials, rubber and metals.

11. Use of colouring granules according to claims 1 to 6 in different mixtures.

## Revendications

1. Granulés colorants à écoulement libre, chimiquement résistants, qui sont stables en couleur et thermiquement dans des milieux agressifs, caractérisés en ce qu'ils contiennent :
- 20-94,8% en poids d'un ou plusieurs matériau(x) colorant(s) inorganique(s) et/ou pigment(s);
- 5-75% en poids d'une ou plusieurs matière(s) vitrifiable(s) (frittes) et/ou verre(s);
- 0,2-20% en poids d'un ou plusieurs liant(s) inorganiques et/ou organique(s);
et en ce qu'ils présentent une dimension moyenne de particules comprise entre 5 et 25 µm, de préférence comprise entre 5 et 12 µm.

2. Granulés colorants selon la revendication 1, caractérisés en ce que la ou les matière(s) vitrifiable(s) présente(nt) la composition suivante :
| | |
|---|---|
| SiO₂ + B₂O₃ + Al₂O | 20-90% en poids |
| Na₂O + Li₂O | 0-6% en poids |
| K₂O | 0-6% en poids |
| CaO + MgO + SrO | 10-25% en poids |
| TiO₂ + ZrO₂ | 0-35% en poids |
| Bi₂O₃ + P₂O₅ + V₂O₅ + MoO₃ + WO₃ | 0-40% en poids |
| ZnO | 0-10% en poids |
avec une teneur en B₂O₃ inférieure à 25% en poids, de préférence inférieure à 5% en poids.

3. Granulés colorants selon la revendication 1 ou 2, caractérisés en ce qu'ils comprennent comme liant, en plus ou à la place des liants inorganiques et/ou organiques, un ou plusieurs organosilane(s) et/ou organopolysiloxane(s) hydrophobe(s) selon une teneur comprise entre 0,03 et 15% en poids, de préférence comprise entre 0,1 et 6% en poids, la teneur globale pour le liant organosilane et/ou polyorganosiloxane devant représenter au moins 0,2% en poids et au plus 20% en poids.

4. Granulés colorants jaunes selon l'une ou plusieurs des revendications 1 à 3, caractérisés en ce qu'ils comprennent un ou plusieurs matériau(x) colorant(s) jaune(s) choisi(s) parmi les jaunes à base d'oxyde de zirconium/ praséodyme/silicium, d'oxyde de zirconium/vanadium et d'oxyde d'étain/vanadium.

5. Granulés colorants bleus selon l'une ou plusieurs des revendications 1 à 3, caractérisés en ce qu'ils contiennent un ou plusieurs matériau(x) colorant(s) bleu(s) choisi(s) parmi les bleus à base d'oxyde de cobalt, d'oxyde de cobalt/aluminium, d'oxyde de cobalt/aluminium/tungstène, d'oxyde de cobalt/silicium, d'oxyde de zirconium/vanadium et d'oxyde de zinc /cobalt/aluminium.

6. Granulés colorants rouges selon l'une ou plusieurs des revendications 1 à 3, caractérisés en ce qu'ils contiennent un ou plusieurs matériau(x) colorant(s) rouge (s) choisi(s) parmi les rouges à base d'oxyde de zirconium/fer/silicium, d'oxyde de fer, d'oxyde de chrome/étain et d'oxyde de chrome/aluminium.

7. Procédé de fabrication de granulés colorants selon les revendications 1 à 6, caractérisé en ce que les composants des granulés, à l'exclusion du liant, qui sont éventuellement broyés pour obtenir une dimension moyenne de particules inférieure à 10 µm, de préférence inférieure à 5 µm, sont intimement mélangés dans une unité de granulation et sont granulés avec un ou plusieurs liant(s) inorganique(s) et/ou organique(s) selon une teneur comprise entre 0,2 et 20% en poids, de préférence comprise entre 0,5 et 10% en poids, par rapport à la teneur en solides, éventuellement avec addition d'eau et/ou de substances favorisant la dispersion, sont ensuite portés à l'équilibre thermique à une température comprise entre 120 et 1200°C, de préférence comprise entre 150 et 350°C pendant un temps allant jusqu'à 24 heures et sont éventuellement calibrés.

8. Procédé de fabrication de granulés colorants selon la revendication 7, caractérisé en ce que les composants des granulés à l'exclusion du/des liant(s) sont amenés à une dimension moyenne de particules inférieure à 10 µm, de préférence inférieure à 5 µm, sont mélangés avec un ou plusieurs liant(s) inorganique(s) et/ou organique(s) selon une teneur comprise entre 0,2 et 20% en poids, de préférence comprise entre 0,2 et 10% en poids par rapport à la teneur en solides, éventuellement avec addition d'eau et/ou de substances favorisant la dispersion, la suspension ainsi obtenue étant pulvérisée dans une tour de pulvérisation pour former des granulés présentant le plus possible une forme de billes et les granulés sont éventuellement portés à l'équilibre thermique à une température comprise entre 120 et 1200°C, de préférence comprise entre 150 et 350°C pendant un temps allant jusqu'à 24 heures et calibrés.

9. Utilisation des granulés colorants selon les revendications 1 à 6, dans des émaux, des glaçures, des couches de céramique, des verres, des matières synthétiques, des laques, des gommes, des stratifiés, des encres d'imprimerie et des encres colorées.

10. Utilisation des granulés colorants selon les revendications 1 à 6, comme colorant pour la décoloration en surface de produits émaillés, de glaçures, de couches de céramique, de verres, de matières synthétiques, de gommes et de métaux.

11. Utilisation de granulés colorants selon les revendications 1 à 6, sous la forme de mélanges variés.
